# EUROPEAN PATENT APPLICATION

(11) **EP 2 536 113 A1**
(43) Date of publication of application: **19.12.2012**
(21) Application number: 11170309.6
(22) Date of filing: 17.06.2011
(51) Int. Cl.: H04M 3/22, H04W 24/08

(54) **Shadow network for bypass detection**

(71) Applicant: Meucci Solutions NV, 9050 Gent-Ledeberg (BE)
(72) Inventor: Van der Meeren, Guy, 9052 Gent (BE); Tuytte, Conrad, 9070 Destelbergen (BE); De Bontridder, Lieven, 9500 Geraarsbergen (BE); Philips, Peter, 1910 Kampenhout (BE); Mouton, Kenneth, 9000 Gent (BE); Verlinde, Dirk, 8650 Houthulst (BE)
(74) Representative: Plas, Axel Ivo Michel

(57) **Abstract**

According to the invention the system (1) for detection of a bypass (540) comprises a shadow network (10S, 20S) for verification purposes, said shadow network (10S, 20S) comprising at least a further means (10S) adapted to originate a shadow test call to said telecommunication network (50) under test from outside the telecommunication network (50) under test and a at least a further receiver probe (20S) with a subscription for terminating said shadow test call, between which low volume shadow test calls are setup.

## Description

### Field of the Invention

The present invention generally relates to a system for detection of an interconnect bypass in telecommunication networks, especially in wireless telecommunication networks such as for example of the type GSM, UMTS or similar, but also in wired telecommunication networks.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by seting up a new call making use of end user facilities of the receiving operator, the CLI of the calling party wil be replaced with the CLI of the new call. This leads to inconveniences for the receiving parties which receive an erroneous CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and WO2008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators.

A known system that overcomes the abovementioned drawbacks is the Meucci system as described on their website: http://www.meucci-solutions.com. This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system as it obtains the received CLI of the test call from the receiver probe.

However all the above mentioned systems suffer from the risk of the operator of a bypass detecting the test calls for example by analysing their calling behaviour. The operator then subsequently blacklists the subscriptions or other means used for generating or receiving these calls in order to avoid detection. In some cases the operator after being detected and optionally taken out of operation by a system for detection of a bypass can blacklist all calls originating from a specific telecommunication network that was determined to originate test calls or to called parties from a specific network that was determined to receive test calls and simply install new subscriptions in the bypass to continue operation.

As such there is a need for a system that can provide real time information about the availability of a bypass. This system should be able to be operated by third parties and should not require access to sensitive data of the telecommunication network operator nor should it require the interfaces to enable such access. Furthermore the system must be able to assess its own reliability by checking whether it was detected and subsequently blacklisted by bypass operators.

### Summary of the Invention

According to a first aspect of the invention there is provided a control system for a system for detection of a bypass of an interconnect to a telecommunication network, said control system configured to:
- initiate a plurality of test calls between at least one means adapted to originate a test call to a telecommunication network under test from outside the telecommunication network under test and at least one receiver probe with a subscription for terminating said test call,
- said test calls having as called party a phone number configured to terminate said test calls on said subscription,
- said test calls having no or a predetermined calling party,
- said test calls being initiated at a first predetermined average rate,
- said means and said subscription forming a test network;
- receive from the receiver probe call information comprising a received calling line identification of the respective test calls; and
- analyse the received calling line identification of the respective test calls such that the presence of the bypass can be detected,
CHARACTERIZED IN THAT said control system is further configured to:
- initiate a plurality of shadow test calls between at least a means adapted to originate a shadow test call to said telecommunication network under test from outside the telecommunication network under test and at least a receiver probe with a subscription for terminating said shadow test calls,
- said shadow test calls having as called party at least one further phone number configured to terminate said shadow test calls on said subscription,
- said shadow test calls having no or a further predetermined calling party,
- said shadow test calls being initiated at a second predetermined average rate which is lower than the first predetermined average rate,
- said means and said subscription forming a shadow network for verification purposes that is separate from said test network;
- receive from said receiver probe call information comprising a received calling line identification of the respective shadow test calls; and
- analyse the received calling line identification of the respective shadow test calls such that presence of the bypass can be detected.

The use of the shadow test calls which have a lower risk of being detected by the operator of an interconnect bypass allows the control system according to the invention to assess its own reliability. It is important that the shadow test calls are initiated at a low rate, this means a rate that is substantially lower than the rate of regular test calls in order to sufficiently decrease the risk of counter detection by a bypass operator. It is further also important that the shadow network is separated from the test network, this means that none of the phone numbers used as called party for terminating the shadow test calls are used as called party for terminating the test calls, and none of the predetermined calling parties for terminating the shadow test calls are used as calling party for terminating the test calls.

Preferably said subscription for terminating said shadow test calls is a further subscription separate from said subscription for terminating said test calls.

This further separates the test network from the shadow network as not only the telephone numbers used as called party, but also the subscriptions for terminating test calls are separated from those for terminating shadow test calls.

Preferably said receiver probe comprising said further subscription for terminating said shadow test calls is a further receiver probe separate from said receiver probe comprising said subscription for terminating said test calls.

This still further separates the test network from the shadow network as not only the subscriptions for making test calls are separated from those for making shadow test calls, but the respective subscriptions are also arranged in separate receiver probes.

According to a preferred embodiment said means adapted to originate a shadow test call is a further means separate from said means adapted to originate said test call.

This still further separates the test network from the shadow network as not only the calling parties of the test calls are separated from those for making shadow test calls, but the respective means for originating test calls are separated from those for making shadow test calls.

Preferably the second predetermined average rate corresponds to an average rate of normal network traffic.

In order to still further lower the risk of detection of the shadow network, the network traffic generated by the shadow network, even if it is lower than that generated by the test network, should not divert too much the normal network traffic.

According to an embodiment of the invention said control system is further configured to instruct said further receiver probe to pick up a number of said shadow test calls.

By picking up a number of the shadow test calls the answer/seizure ratio, this is the number of successfully answered calls divided by the total number of calls attempted (seizures) multiplied by one hundred, of the further means and/or subscriptions of the further receiver probes associated with the shadow test calls will be closer to that of normal human calling behaviour and thus make it more difficult for the bypass operators to identify.

According to a further embodiment said control system is configured to instruct said further receiver probe to pick up only a number of said shadow test calls on suspect routes.

While reducing the risk of counter detection this additionally keeps the system efficient as no time or money is wasted on picking up the test call for routes that do not seem to contain a bypass. In this application the term "route" is used for all means on a specific telecom operator or telecom provider that guide a specific shadow test call from where it was originated to a specific receiving subscription or operator, subject to routing rules through various telecommunication networks. A suspect route is a route for a specific shadow test call for which the control system has previously detected or is in the process of detecting a bypass.

According to a further embodiment said control system is configured to instruct said further receiver probe to pick up only between 20% to 80%, preferably 66% of said shadow test calls on suspect routes.

These answer/seizure ratios (ASR) should be based on normal industry ratio's, such that there is little difference between what is artificially created by the test system and what would be the expected normal behaviour for the body managing or operating the route. In general the ASR varies between 50 and 70%.

These answer/seizure rates offer a good compromise between efficiency of execution of the test calls and avoiding counter detection by the bypass operator.

According to still a further embodiment said control system is configured to instruct said further receiver probe to pick up said shadow test calls on suspect routes based on said analysis of the received calling line identification.

The received CLI is transmitted just before or after the first ring. The analysis of the CLI which leads to the detection of the presence of a bypass can thus be performed while the shadow test call is ringing and on the basis of the outcome it can be decided whether to pick up the shadow test call or not. This allows for an efficient, real time system with capabilities to check for counter detection by the bypass operator.

According to still a further embodiment said control system is configured to instruct said further means and/or said further receiver probe to randomize one or more shadow test call parameters. Said shadow test call parameters comprise one or more of the following:
●start time of a shadow test call;
● duration of a shadow test call;
● ringing duration of a shadow test call; and
● timing of one or more signalling messages of a shadow test call.

This random calling behaviour even further decreases the risk of counter detection of the shadow test calls.

According to still a further embodiment said control system is configured to instruct said further means and/or said receiver probe to inject content in said shadow test calls. Said content comprises one or more of the following:
● DTMF tones;
● noise; and
● speech.

In this way the test calls even more closely resemble normal human calling behaviour which reduces the risk of counter detection.

According to a further embodiment of the invention said control system at least partly is comprised within said receiver probe and/or said further receiver probe.

The control system can thus optionally be implemented in a distributed way, for example in order to speed up processing.

According to still a further embodiment of the invention said control system is further configured to initiate a process for notifying and/or cutting off said bypass if said bypass was detected based on said analysis of said test calls, and
in that said control system is configured not to initiate or to delay said process for notifying and/or cutting off of said bypass if said bypass was detected based on said analysis of said shadow test call.

In this way the risk of counter detection of the shadow network is even further reduced as an event such as cutting off or sending a notification to the bypass could be correlated to the calls immediately preceding such an event which could possibly comprise one or more shadow test calls.

According to a second aspect of the invention there is provided a system for detection of a bypass of an interconnect to a telecommunication network comprising a control system according to the first aspect of the invention, characterised in that said system further comprising:
● at least one means adapted to originate a test call to said telecommunication network under test from outside the telecommunication network under test and at least one receiver probe with a subscription for terminating said test call, said means and said receiver probes forming a test network; and
● at least one further means adapted to originate a shadow test call to said telecommunication network under test from outside the telecommunication network under test and at least one further receiver probe with a subscription for terminating said shadow test call, said further means and said receiver probes forming a shadow network for verification purposes that is separate from said test network.

According to a third aspect of the invention there is also provided a method for detecting a bypass of an interconnect to a telecommunication network under test by means of said system according to the second aspect of the invention, said method comprising the steps of:
● said means originating test calls to said telecommunication network under test from outside the telecommunication network under test;
● said receiver probe with a subscription terminating said test calls; and
● said control system initiating said test calls at a first predetermined average rate; receiving from said receiver probe call information comprising a received calling line identification (CLI) of said test calls; and analysing the received calling line identification (CLI) such that presence of a bypass can be detected,
CHARACTERISED IN THAT the method comprises the further steps of:
● said further means originating shadow test calls to said telecommunication network under test from outside the telecommunication network under test;
● said further receiver probe with a subscription terminating said shadow test calls; and
● said control system initiating said shadow test calls at a second predetermined average rate which is lower than said first predetermined average rate; receiving from said further receiver probe call information comprising a received calling line identification (CLI) of said shadow test calls; and analysing the received calling line identification (CLI) such that presence of a bypass can be detected.

### Brief Description of the Drawings

Fig. 1 illustrates a prior art embodiment of a system for detection of a bypass without the presence of a bypass;

Fig. 2 illustrates the embodiment according to Figure 1 with the presence of a bypass;

Fig 3 illustrates an embodiment of a system for detection of a bypass according to the invention with the presence of a bypass;

Fig 4 illustrates an alternative embodiment of a system according to the invention;

Fig 5 illustrates still a further alternative embodiment of a system according to the invention; and

Fig 6 illustrates a further alternative to the embodiment according to Fig 5.

### Detailed Description of Embodiment(s)

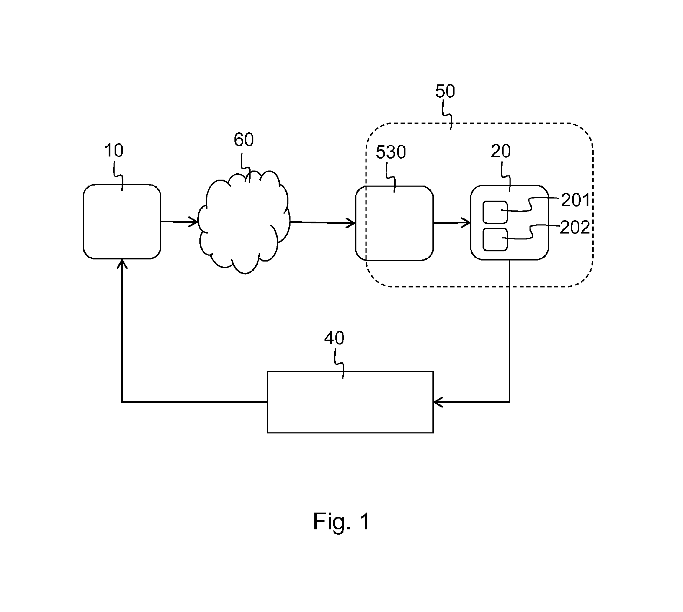

Figure 1 shows a system 1 for detection of a bypass of an interconnect 530 to a telecommunication network 50 under test. The system 1 comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, voip systems, call back mechanisms, any type of pc originating calls, mobile networks, wireline networks, call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with at least one subscription 201, 202 for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with at least one subscription 201, 202 for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, ....

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then terminates the incoming test call. It is not required for the receiver probe 20 to actually answer the test call. The control system 40 could for example be configured in such a way that it instructs means 10 to initiate the test call to the receiver probe 20 and to automatically terminate the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected.

As the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. If this analysis of the received CLI indicates the calling party of the test call is located outside the telecommunication network under test, no bypass was detected. Thus as soon as the analysis is able to ascertain that the received CLI does not belong to the numbering plan associated with the telecommunication network 50 under test, no bypass was detected. In order to also take into account number portability the analysis could comprise a check if the received CLI comprises a number which is comprised in the number database of the telecommunication network 50 under test. If this is not the case, no bypass was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

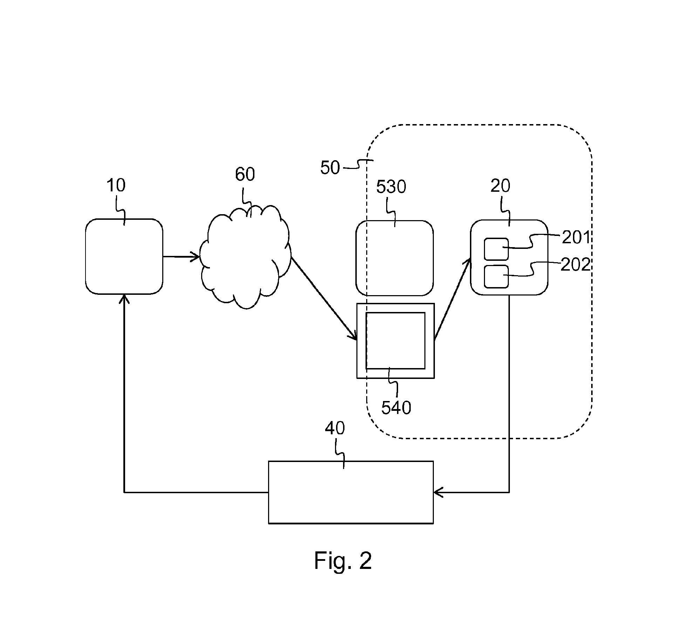

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50 and to the same destination and as such bypass the interconnect 530. However when the control system 40 now receives the receiver call information from the receiver probe 20 that received the test call initiated from means 10, the received CLI, "+32 474 111 222" will not match the calling party number, "+44 20 1234 5678", associated with means 10. This is because instead of the calling party number of means 10, the calling party number of one of the subscriptions in the bypass 540, "+32 474 111 222", will be found in the received CLI by receiver probe 20. The control system 40 is then able to assess that a bypass 540 is present.

As explained above because the means 10 originates the test call from outside the telecommunication network 50 under test, the presence of a bypass 540 can be detected if the received CLI belongs to a subscription to the telecommunication network 50 under test. This can be implemented by checking whether received CLI comprises a prefix which belongs to the numbering plan of the telecommunication network 50 under test " +32 474 xxx xxx" or when to also take into account number portability by checking whether the received CLI comprises a number which is comprised in the number database of the telecommunication network 50 under test.

It is clear that the test calls could result in an identifiable call pattern. The test calls after initiation allow for a few rings and are then ended without being picked up. Even when the system 1 initiates, originates, receives and analyses a plurality of test calls between a plurality of means 10 and a plurality of receiver probes 20, this identifiable call pattern would enable the bypass operator to easily identify each of those means 10 and/or the subscriptions 201, 202 for terminating the test call used in the receiver probes 20 as the test calls from these means 10 to the these terminating subscriptions 201, 202 are usually not picked up as explained above. The bypass operator or carrier 60 could then blacklist the means 10 and/or the subscriptions 201, 202 for terminating the test call used in the receiver probes 20 and stop routing calls from or to the bypass 540 in order to avoid detection by the system 1.

Even when implementing certain measures for avoiding counter detection of the test calls by a bypass operator as for example described in a co-pending application of the applicant EP11161703.1 there still exists a risk for counter detection. Counter detection could still be possible when the incremental volume of test calls becomes too high or when test calls are executed over a longer period or when countermeasures are not fully applied or when the control system initiates a process for sending a notification to the bypass operator or for cutting off the bypass by for example blocking the subscriptions in use in the bypass 540 when a bypass 540 was detected by the system 1. These events could provide an indication to the operator of such a bypass that a system for detection of a bypass is active. This could then prompt the operator of the bypass to analyse the the calling behaviour associated with calls routed through the bypass 540 for example in an attempt to identify the test calls amongst the calls routed through the bypass before the bypass was blocked. Subsequently the bypass operator could then set up a new bypass 540 that doesn't route calls which match the detected calling behaviour associated with these test calls by blacklisting calling parties and called parties associated with the detected test calls or specific means 10 associated with the detected test calls or operators or carriers routing calls from such means 10 to the bypass 540. As explained above this calling behaviour could for example be characterised by the frequency of the calls, the fact that the calls are normally not picked up, the ringing duration, ....

It is very difficult for the system 1 for detection of a bypass to assess whether no bypass is present or whether there still is a bypass in operation that is successfully blacklisting the test calls.

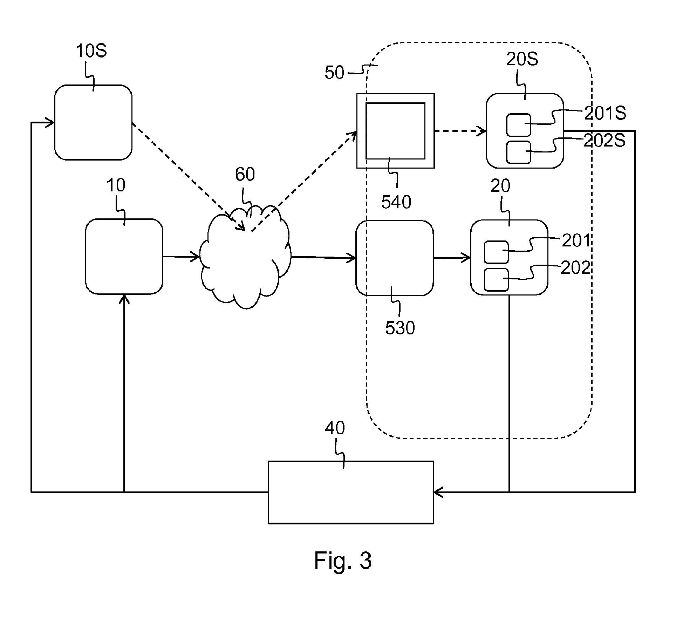

To overcome this according to the invention use is made of a shadow network 10S, 20S for verification purposes as shown in more detail in Figures 3. The control system 40 according to the invention initiates a plurality of test calls between at least one means 10 and at least one receiver probe 20. As explained above this means 10 is adapted to originate a test call to a telecommunication network 50 under test from outside the telecommunication network 50 under test and the receiver probe 20 comprises at least one subscription 201, 202 for terminating test calls. These test calls are initiate by the control system at a first predetermined average rate, which is generally several test calls per hour, for example 10, 20 up to several hundred test calls per hour. These means 10 in combination with these subscriptions 201, 201 of the receiver probes 20 as such form a test network 10, 20. As explained above the control system 40 receives from the receiver probe 20 call information comprising a received calling line identification (CLI) of these respective test calls, which are subsequently analysed by the control system 40 such that the presence of the bypass 540 can be detected, As shown in Figure 3 the control system 40 further initiates a plurality of shadow test calls. These shadow test calls are initiated between at least a further means 10S and a further receiver probe 20S. Similar as said means 10 said further means 10S is adapted to originate a shadow test call to said telecommunication network 50 under test from outside the telecommunication network 50 under test and similar as said receiver probe 20 the further receiver probe 20S comprises at least one subscription 201 S, 202S for terminating said shadow test calls.

However it is important that said shadow test calls are initiated at a second predetermined average rate which is substantially lower than the first predetermined average rate at which the test calls are initiated as this lowers the risk of counter detection by the bypass operators of the shadow test calls with when compared to the risk of counter detection of the test calls. According to one embodiments the rate of initiated shadow test calls could be limited according to one or more of the following rules or any combination of them:
● A maximum rate of two to ten, for example three, shadow test calls per day on each specific combination of means 10S and receiver probes 20S;
● A maximum rate of ten to thirty, for example twenty, shadow test calls per day terminated on each specific subscription 201 S, 202S comprised within said further receiver probes 20S;
● A maximum rate of ten to thirty, for example twenty, shadow test calls per day originated from each specific further means 10S;
● A maximum rate of twenty-five to seventy-five, for example fifty, shadow test calls originated on each specific combination of further means 10S and subscriptions 201s, 202S from receiver probes 20S per month, preferably spread out randomly over a normal human distribution pattern, this means that for example no calls are made between 2 AM and 5 AM;
● maximum rate of initiating shadow test calls on two to ten, for example seven, specific days per month on each specific combination of further means 10S and subscriptions 201 S, 202S from receiver probes 20S per month;
● Etc.

According to a preferred embodiment of the invention, the second predetermined average rate is not only lower as explained above, but also corresponds to an average rate of normal traffic. The shadow test calls to the further subscriptions 201 S, 202S should for example not be amongst the 10% subscriptions with the highest network traffic on a specific route or of a specific operator.

The shadow network 10S, 20S for verification purposes is formed by further means 10S and said further receiver probe 20S. The calls originated and received by this shadow network are referred to as shadow test calls. The main concept behind the shadow test calls is that they are used at most sporadically or on request when the efficiency of the system 1 for detection of a bypass needs to be verified. These shadow test calls in this way generate a low volume of calls that have a called party and calling party which has not or at most sporadically been active on the route of a bypass 540 and as such present a low risk for already being blacklisted. It is therefore also recommended that said shadow network 10S, 20S is separate from said test network 10, 20. This means that there is no overlap between the means 10 and further means 10S and also between receiver probes 20 and further receiver probes 20S or the respective subscriptions used therein.

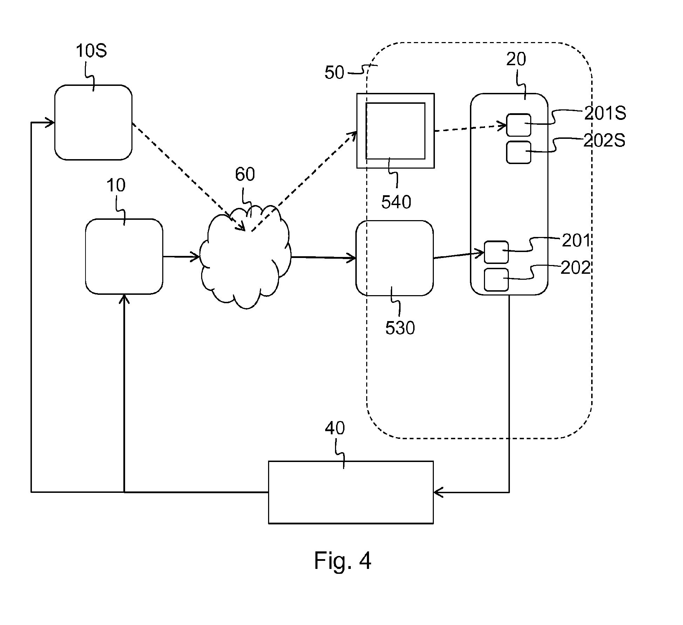

Although in the preferred embodiment the receiver probes 20 and further receiver probes 20S as described above are separate, according to an alternative embodiment as shown in Figure 4, it suffices for the respective subscriptions 201, 202 and further subscriptions 201 S, 202S not to overlap while possibly being accommodated in the same receiver probe 20.

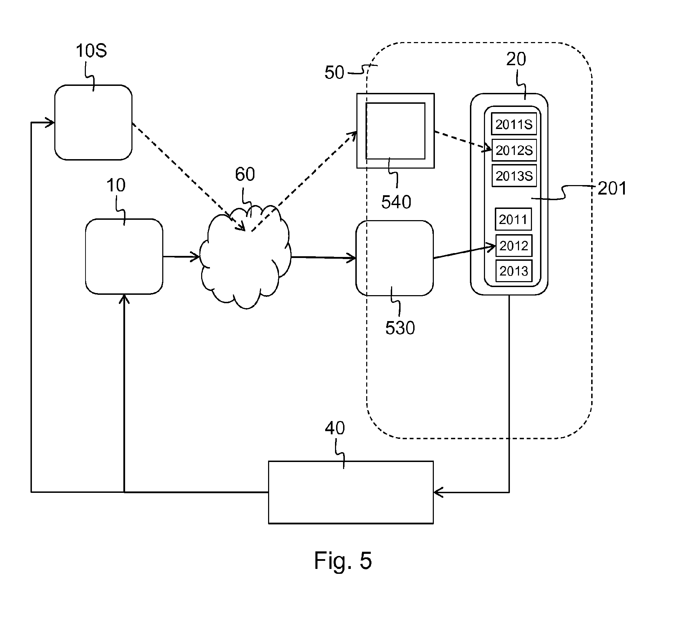

According to still a further embodiment as shown in Figure 5, in the specific case that a set of different phone numbers 2011, 2012, 2013, 2011 S, 2012S, 2013S are available on a single subscription 201, it suffices that the respective phone numbers 2011, 2012, 2013 for terminating the test calls on the subscription 201 are separate from the phone numbers 2011 S, 2012S, 2013S for terminating the shadow test calls on this subscription 201. Making available a set of different phone numbers for terminating test calls or shadow test calls on a single subscription 201 can for example be implemented by making use of Multiple Subscriber Number options on single physical ISDN BRI fixed line, by making use of multiple PBX numbers on a single physical ISDN PRI line, or by populating by means of the databases or the IN Platform multiple Mobile Subscriber Integrated Service Digital Network numbers on a single physical SIM card subscription identified by its International Mobile Subscriber Identity (IMSI). As, for example in a mobile telecommunication context, the MSISDN numbers defined on an IMSI are an attribute defined on this IMSI in the HLR such an operation does not require any physical intervention..

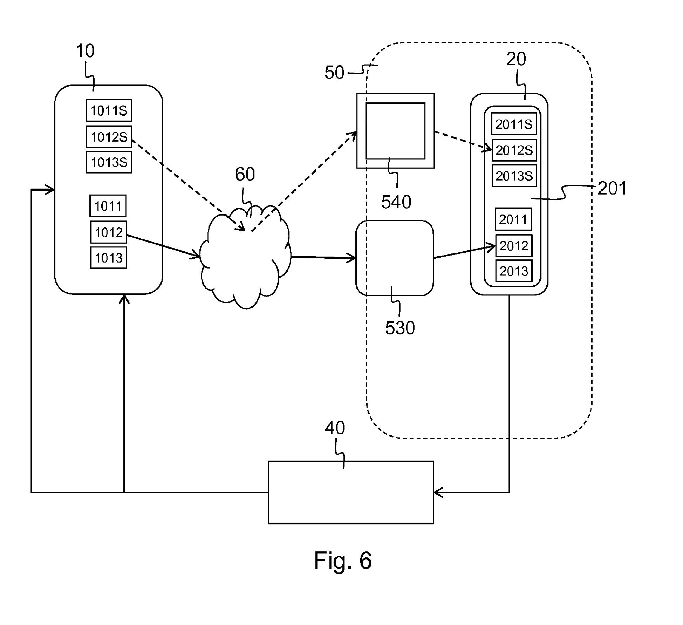

According to still a further alternative embodiment to the embodiment shown in Figure 5, as shown in Figure 6, in the specific case that a set of different phone numbers 1011, 1012, 1013, 1011S, 1012S, 1013S are available from a single means 10, it suffices that the respective phone numbers 1011, 1012, 1013 serving as a predetermined calling party for the test calls from the means 10 are separate from the phone numbers 1011 S, 1012S, 1013S serving as a predetermined calling party for the shadow test calls from the means 10. As in this case the predetermined calling parties of the test calls and the further predetermined calling parties of the shadow test calls are still separated, although originated by the same means 10, the shadow network is still sufficiently separated from the test network. According to an alternative embodiment, for example when the means 10 is implemented as a VOIP system, it is also possible that a test call or a shadow test call can be set up without a calling party being available, as for example no CLI is available. Also in this case the shadow test network is still sufficiently separated from the test network, even if the same means 10 is used, as there is no information available to the operator of the bypass 540 for identifying this specific means 10 and as explained above, for example with reference to the embodiment of Figure 5, called parties of the test calls and the shadow test calls are still separated.

The processing of the shadow test calls by the control system 40 is similar to the processing that has been described for the test calls and common alternatives for specific embodiments will not be repeated for the sake of brevity. This means that the control system receives from the further receiver probe (20S) call information comprising a received calling line identification (CLI) of the respective shadow test calls subsequently analyses this received calling line identification (CLI) of the respective shadow test calls such that presence of the bypass 540 can be detected.

If the control system 40 is able to detect by analysis of these low volume shadow test calls that a bypass 540 is operating on a route where test calls are not able to detect it, the control system 40 is able to ascertain that this bypass 540 in operation on that route has successfully blacklisted the system 1 for detection of a bypass.

According to an alternative embodiment, if the control system 40 is able to detect by comparative analysis of the low volume shadow test calls and the test calls that there is a significant difference in the share of calls that are routed through a bypass 540, the control system is able to ascertain that one or more bypasses in operation have successfully blacklisted the system 1 for detection of a bypass. This significant difference in the rate of calls routed through a bypass could for example be a difference of 10% or more, for example 25%.

In order to still further decrease the risk of counter detection of the shadow network 10S, 20S the system 1 therefor optionally implements additional counter measures to avoid discovery. The common concept behind these counter measures is that the system 1 tries to more closely align the shadow test calls with a normal human calling patterns instead of the calling pattern associated with prior art systems for identifying a bypass 540.

According to one embodiment this is implemented by configuring system 1, generally by means of its control system 40, to pick up a number of the shadow test calls that are originated by one or more further means 10S. This will make it more difficult for the bypass operators, or carriers 60 up front involved with routing call traffic to the bypass operators, to detect, by analysing the calling behaviour towards the respective further receiver probes 20S, the subscriptions 201 S, 202S used for terminating the respective shadow test calls and also the respective further means 10S used as calling parties to originate the respective test calls. It is not essential to pick up all the shadow test calls. If for example ten shadow test calls are initiated by the system 1, four of them could be picked up and the remaining six could still be left unanswered. This allows making a trade-off between the risk of counter detection and the cost associated with picking up the test call. According to a first possibility the control system 40 for deciding whether to pick up a shadow test call could be implemented in the further receiver probe 20S itself, but it is equally possible to let the further receiver probe 20S be instructed by a separate control system 40 to pick up a specific shadow test call. Or any suitable combination is possible such as for example a distributed control system 40 comprised at least partly within at least one further receiver probe 20 and optionally also comprising a separate device forming part of this control system 40.

According to an advantageous embodiment of the system 1 according to the invention a number of shadow test calls is only picked up by the further receiver probe 20S if they originated from a suspect route. This means that an analysis of earlier test calls or shadow test calls determined previously that a specific route, this is a test call or shadow test call from a specific means 10 or further means 10S or set of means 10 or further means 10S outside the network 50 under test to the network 50 under test, contained a bypass 540. The receiver probe 20 or further receiver probe 20S could respectively determine based on information from the control system 40 or optionally provided by means 10 or further means 10S respectively or the time at which the respective test call or shadow test call was scheduled when exactly a test call or shadow test call on a specific suspect route was received. By limiting the shadow receiver probe 20S to only pick up test calls along this suspect route the cost associated with picking up shadow test calls is further minimized while not unnecessary increasing the risk for counter detection. The Answer/Seizure ratio (ASR) of these shadow test calls, which is the number of picked up shadow test calls divided by the total number of calls attempted multiplied by 100, is preferably in line with that associated with normal human behaviour which is normally higher than 50%, for example 66%, but a range of about 20% to 80% is possible.

According to a further advantageous embodiment determination of a suspect route is made in real time by analysis of the received CLI during the shadow test call. As the CLI is transmitted just before or after the first ring, the analysis of the CLI which leads to the detection of the presence of a bypass can thus be performed while the shadow test call is ringing. The control system 40 instructs the further receiver probe 20S to pick up the shadow test call or not on the basis of the outcome of this analysis of the CLI. This enables a system with real time flexibility, enhanced economy and which is simple in implementation as no data of previous test calls or shadow test calls needs to be stored and/or analysed for determination of suspect routes.

According to still a further embodiment in order to still further approach the calling pattern associated with human behaviour certain of the test call parameters such as the test the start time of a shadow test call, duration of a shadow test call, ringing duration of a shadow test call, etc. or any suitable combination of these parameters could be randomized or could be provided with a pattern that resembles human behaviour. For example instead of a fixed calling pattern for initiating ten shadow test calls every five hours, the interval between these shadow test calls could be randomized to select random intervals between the initiation of the respective shadow test calls for example in a range between one and ten hours. Alternatively instead of setting a fixed number of rings to be allowed for all initiated shadow test calls, whether the control system 1 instructed the further receiver probe 20S to pick up or not, a randomized amount of rings could be set up, for example allowing between two and seven rings before picking up or closing ending the shadow test call. For a shadow test call that is answered also the call duration could be randomized, for example between thirty seconds and five minutes. All these call parameter randomisations or any suitable combination of them allow to decrease the risk of counter detection because they avoid the availability of a fixed calling pattern that could be detected by the bypass 540 operators in an attempt to counter detect system 1. In order to still further randomise the calling behaviour associated with the shadow test calls said system 1 is optionally further configured to randomize the timing of one or more signalling messages, such as for example: SS7 Initial Address Message (IAM); Address Complete Message (ACM); Answer Message (ANM), and similar signalling messages; or SIP Invite, Progress, OK, Ack, Bye, and similar signalling messages. It is clear that equivalent signalling messages in use on the telecommunication network to the user interface and other technologies also can be considered to be randomised. These signalling messages are for example described in the call flow charts in SS7 specifications (ITU, 3GPP TS 03.18 ...), SIP specifications (RFC3261) and similar specifications for other technologies.

Still a further possibility to further approach human call pattern behaviour is implemented in an embodiment according to the invention by injecting content in the shadow test calls. This content could for example be DTMF tones, noise and/or speech. This avoids the possibility for counter detection by an analysis of the shadow test call content. The shadow test calls, even when picked up, namely don't contain any content. By injecting content into these shadow test calls the risk for counter detection can even further be reduced. The content could be generated by the further means 10S and/or further receiver probe 20S in a simple way by for example generating DTMF tones. This capability is available anyhow to further means 10S for dialling the shadow test call. As mentioned above noise or recorded speech by for example playing a suitable sound file from a suitable device, such as for example an answering machine, a computer, an mp3 player, ....

In order to still further decrease the risk of detection of the system 1 according to the invention after detection of a bypass 540 by means of shadow test calls it is advantageous to delay the notification and/or cutting off of this interconnect bypass 540 or not to perform it at all. In this way the operator of the bypass will not be able to correlate the call activity immediately preceding the cut off or notification to a system 1 for detection of a bypass and specifically the shadow network 10S, 20S being used in this system.
As explained above in general the method for detecting a bypass 540 of an interconnect 530 to a telecommunication network 50 comprises the steps of:
● said means 10 originating test calls to said telecommunication network 50 under test from outside the telecommunication network 50 under test;
● Said receiver probe 20 with a subscription 201, 202 terminating said test calls; and
● said control system 40 initiating said test calls at a first predetermined average rate; receiving from said receiver probe 20 call information comprising a received calling line identification (CLI) of said test calls; and analysing the received calling line identification (CLI) such that presence of a bypass 540 can be detected,
● said further means 10S originating shadow test calls to said telecommunication network 50 under test from outside the telecommunication network 50 under test;
● said further receiver probe 20S with a subscription 201 S, 202S terminating said shadow test calls; and
● said control system 40 initiating said shadow test calls at a second predetermined average rate which is lower than said first predetermined average rate; receiving from said further receiver probe 20S call information comprising a received calling line identification (CLI) of said shadow test calls; and analysing the received calling line identification (CLI) such that presence of a bypass 540 can be detected.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A control system (40) for a system (1) for detection of a bypass (540) of an interconnect (530) to a telecommunication network (50), said control system (40) configured to:
- initiate a plurality of test calls between at least one means (10, 10S) adapted to originate a test call to a telecommunication network (50) under test from outside the telecommunication network (50) under test and at least one receiver probe (20) with a subscription (201, 202) for terminating said test call,
- said test calls having as called party a phone number (2011, 2012, 2013) configured to terminate said test calls on said subscription (201, 202),
- said test calls having no or a predetermined calling party (1011, 1012, 1013),
- said test calls being initiated at a first predetermined average rate,
- said means (10, 10S) and said subscription (201, 202) forming a test network;
- receive from the receiver probe (20) call information comprising a received calling line identification (CLI) of the respective test calls; and
- analyse the received calling line identification (CLI) of the respective test calls such that the presence of the bypass (540) can be detected,
**CHARACTERIZED IN THAT** said control system (40) is further configured to:
- initiate a plurality of shadow test calls between at least a means (10, 10S) adapted to originate a shadow test call to said telecommunication network (50) under test from outside the telecommunication network (50) under test and at least a receiver probe (20, 20S) with a subscription (201, 202, 201S, 202S) for terminating said shadow test calls,
- said shadow test calls having as called party at least one further phone number (2011S, 2012S, 2013S) configured to terminate said shadow test calls on said subscription (201, 202, 201 S, 202S),
- said shadow test calls having no or a further predetermined calling party (1011S, 1012S, 1013S),
- said shadow test calls being initiated at a second predetermined average rate which is lower than the first predetermined average rate,
- said means (10, 10S) and said subscription (20, 20S) forming a shadow network for verification purposes that is separate from said test network;
- receive from said receiver probe (20, 20S) call information comprising a received calling line identification (CLI) of the respective shadow test calls; and
- analyse the received calling line identification (CLI) of the respective shadow test calls such that presence of the bypass (540) can be detected.

2. A control system according to claim 1, wherein said subscription (201S, 202S) for terminating said shadow test calls is a further subscription (201 S, 202S) separate from said subscription (201, 202) for terminating said test calls.

3. A control system according to claim 2, wherein said receiver probe (20S) comprising said further subscription (201 S, 202S) for terminating said shadow test calls is a further receiver probe (20S) separate from said receiver probe (20) comprising said subscription (201, 202) for terminating said test calls.

4. A control system according to claim 1, wherein said means (10S) adapted to originate a shadow test call is a further means (10S) separate from said means (10) adapted to originate said test call.

5. A control system according to any of the preceding claims, wherein the second predetermined average rate corresponds to an average rate of normal traffic.

6. A control system according to any one of the preceding claims, wherein said control system (40) is further configured to instruct said further receiver probe (20S) to pick up a number of said shadow test calls.

7. A control system according to any one of the preceding claims, wherein said control system (40) is configured to instruct said further receiver probe (20S) to pick up only between 20% to 80%, preferably 66% of said shadow test calls on suspect routes.

8. A control system according to claim 6, wherein said control system (40) is configured to instruct said further receiver probe (20S) to pick up said shadow test calls on suspect routes based on said analysis of the received calling line identification (CLI).

9. A control system according to any one of the preceding claims, wherein said control system (40) is configured to instruct said further means (10S) and/or said further receiver probe (20S) to randomize one or more shadow test call parameters.

10. A control system according to claim 9, wherein said shadow test call parameters comprise one or more of the following:
● start time of a shadow test call;
● duration of a shadow test call;
● ringing duration of a shadow test call; and
● timing of one or more signalling messages of a shadow test call.

11. A control system according to any one of the preceding claims, wherein said control system (40) is configured to instruct said further means (10S) and/or said receiver probe (20S) to inject content in said shadow test calls, wherein said content comprises one or more of the following:
● DTMF tones;
● noise; and
● speech.

12. A control system according to any of the preceding claims, **characterised in that** the control system (40) at least partly is comprised within said receiver probe (20) and/or said further receiver probe (20S).

13. A control system according to any of the preceding claims, **characterised in that** said control system (40) is further configured to initiate a process for notifying and/or cutting off said bypass (540) if said bypass (540) was detected based on said analysis of said test calls, and
**in that** said control system (40) is configured not to initiate or to delay said process for notifying and/or cutting off of said bypass (540) if said bypass (540) was detected based on said analysis of said shadow test call.

14. A system (1) for detection of a bypass (540) of an interconnect (530) to a telecommunication network (50) comprising a control system according to any of the preceding claims, **characterised in that** said system (1) further comprising:
● at least one means (10) adapted to originate a test call to said telecommunication network (50) under test from outside the telecommunication network (50) under test and at least one receiver probe (20) with a subscription (201, 202) for terminating said test call, said means (10) and said receiver probes (20) forming a test network (10, 20); and
● at least one further means (10S) adapted to originate a shadow test call to said telecommunication network (50) under test from outside the telecommunication network (50) under test and at least one further receiver probe (20S) with a subscription (201 S, 202S) for terminating said shadow test call, said further means (10S) and said receiver probes (20S) forming a shadow network (10S, 20S) for verification purposes that is separate from said test network (10, 20).

15. A method for detecting a bypass (540) of an interconnect (530) to a telecommunication network (50) under test by means of said system (1) according to claim 12, said method comprising the steps of:
● said means (10) originating test calls to said telecommunication network (50) under test from outside the telecommunication network (50) under test;
● said receiver probe (20) with a subscription (201, 202) terminating said test calls; and
● said control system (40) initiating said test calls at a first predetermined average rate; receiving from said receiver probe (20) call information comprising a received calling line identification (CLI) of said test calls; and analysing the received calling line identification (CLI) such that presence of a bypass (540) can be detected,
**CHARACTERISED IN THAT** the method comprises the further steps of:
● said further means (10S) originating shadow test calls to said telecommunication network (50) under test from outside the telecommunication network (50) under test;
● said further receiver probe (20S) with a subscription (201 S, 202S) terminating said shadow test calls; and
● said control system (40) initiating said shadow test calls at a second predetermined average rate which is lower than said first predetermined average rate; receiving from said further receiver probe (20S) call information comprising a received calling line identification (CLI) of said shadow test calls; and analysing the received calling line identification (CLI) such that presence of a bypass (540) can be detected.
